# EUROPEAN PATENT APPLICATION

(11) **EP 3 693 732 A1**
(43) Date of publication of application: **12.08.2020**
(21) Application number: 19156367.5
(22) Date of filing: 11.02.2019
(51) Int. Cl.: G01N 30/60, G01N 30/86, B01D 15/18

(54) **INFLUENCING A SEQUENTIAL CHROMATOGRAPHY IN REAL-TIME**

(71) Applicant: Bayer Aktiengesellschaft, 51373 Leverkusen (DE)
(72) Inventor: Schwan, Peter, 51368 Leverkusen (DE); Brandt, Heiko, 51368 Leverkusen (DE); Lobedann, Martin, 42096 Wuppertal (DE); Borchert, Sven-Oliver, 51368 Leverkusen (DE); Poggel, Martin, 51368 Leverkusen (DE); Hille, Rubin, 51368 Leverkusen (DE)
(74) Representative: BIP Patents

(57) **Abstract**

What is disclosed herein describes a system and a method for influencing a sequential chromatography.

## Description

Using sequential chromatography for the processing of proteins gains more and more importance as a sequential chromatography allows for a continuous process with a continuous input into the sequential chromatography and a continuous output of the sequential chromatography.

However, so far options for influencing sequential chromatography - for example a sequential chromatography which forms part of a protein purification system comprising several unit operations - are limited. This is the case even though a precise control of a sequential chromatography would in turn allow to keep important process parameters within predetermined operation ranges.

It was therefore an object of the present invention to provide improved methods for influencing a sequential chromatography.

This object was solved by a system for influencing a sequential chromatography comprising at least
- a fluid stream
- at least one measurement point
- at least one actuator
- at least one sequential chromatography
- at least one process control system influencing the at least one actuator in real-time
wherein
∘ at the at least one measuring point at least one characteristic of the fluid stream corresponding to at least one actual process characteristic is measured, and
∘ wherein said at least one detected process characteristic is transmitted in form of a signal to the at least one process control system,
∘ wherein based on the at least one process characteristic of the fluid stream at least one mathematical or modelling component of the at least one process control system calculates a modified actuating value which is used to influence the at least one sequential chromatography in real-time either via directly influencing an actuator of the sequential chromatography or via influencing an actuator upstream of the sequential chromatography.

In one embodiment of a system for influencing a sequential chromatography as described herein, the system further comprising at least one unit operation.

In one embodiment of a system for influencing a sequential chromatography as described herein, the at least one process control system further comprises a) at least one regulator, at least one regulator used as controller and/or at least one controller for control of at least one means, wherein the at least one regulator or controller for the at least one means comprises at least one PID component which receives at least one signal comprising the at least one detected process characteristic from the at least one measurement point OR wherein the at least one regulator used as controller for the at least one means comprises at least one PID component which receives at least one predictive feedback signal based on at least one predicted process characteristic from at least one predictive model of the at least one means
and/or
b) at least one regulator, at least one regulator used as controller and/or at least one controller for control of the at least one sequential chromatography, wherein the at least one controller or regulator used as controller for control of the at least one sequential chromatography comprises at least one PID component which receives at least one feedback signal based on at least one detected process characteristic from a measurement point at the output of the sequential chromatography OR wherein the regulator used as controller for control of the at least one sequential chromatography comprises at least one PID component which receives at least one predictive feedback signal based on at least one predicted process characteristic from at least one predictive model of the at least one sequential chromatography
   and/or
c) at least one controller such as a non-linear model predictive controller of the at least one sequential chromatography wherein the controller for the sequential chromatography receives at least one signal comprising the at least one detected process characteristic from the at least one measurement point, which in this case is upstream of the at least one sequential chromatography, and wherein the controller for the sequential chromatography in addition receives at least one feedback signal based on at least one detected process characteristic from at least one second measurement point at the output of the sequential chromatography OR wherein the at least one controller of the at least one sequential chromatography receives at least one signal comprising the at least one detected process characteristic from the at least one measurement point, which in this case is upstream of the at least one sequential chromatography, and wherein the controller for the sequential chromatography in addition receives at least one feedback signal based on at least one predicted process characteristic from at least one predictive model of the at least one sequential chromatography
   and/or
d) at least one transfer function comprising at least one empirical model which takes into account the at least one signal comprising the at least one detected process characteristic from the at least one measurement point
characterized in that each of the mathematical or modelling components described under a)-d) calculates a modified actuating value which is used to influence the at least one sequential chromatography in real-time via the at least one actuator.

As used herein the term "sequential chromatography" refers to a chromatography system comprising at least at one point at least two columns in series, In one embodiment the sequential chromatography is selected from the group consisting of Chromacon chromatography, BioSC chromatography system, Sequential Multicolumn Chromatography, Periodic Counter Current (PCC) Chromatography, CaptureSMB and BioSMB.

In one embodiment the at least one means is selected from the group consisting of a valve, a unit operation, e.g. a residence time device or a concentration unit.

In one embodiment of a system for influencing a sequential chromatography as described herein, the predictive model of a) comprise at least one deterministic or at least one empirical model of the at least one means and the predictive models of b)-d) comprise at least one deterministic or at least one empirical model of the at least one sequential chromatography.

As used herein the term "empirical model" refers to a mathematical model based on empirical observations rather than on underlying physical phenomena of the system modelled.

As used herein the term "deterministic model" is used synonymous with the term "mechanistic" and refers to a mathematical model in which outcomes are precisely determined through known physical relationships among states and events.

In one embodiment of a system for influencing a sequential chromatography as described herein, the at least one regulator, the at least one regulator used as controller and/or the at least onecontroller for the control of the at least one means is a regulator or controller for a unit operation.

In one embodiment of a system for influencing a sequential chromatography as described herein, the system further comprising at least one residence time device or at least one intermediate bag.

To a person skilled in the art it is clear that the at least one residence time device or at least one intermediate bag can be comprised in the at least one unit operation

In one embodiment of a system for influencing a sequential chromatography as described herein, the system further comprises at least one conditioning element, which the product stream passes prior to entering the at least one sequential chromatography.

In one embodiment of a system for influencing a sequential chromatography as described herein, the at least one measuring point is selected from the group consisting of at least one detector or a system outlet such as a three way valve.

In another aspect what is described herein relates to a method for influencing a sequential chromatography comprising at least
- Measuring at least one characteristic of a fluid stream corresponding to at least one actual process characteristic at at least one measurement point,
- Transmitting said at least one detected process characteristic in form of a signal to at least one process control system
- Calculating at least one modified actuating value based on the at least one process characteristic of the fluid stream using at least one mathematical or modelling component of the at least one process control system
- Using the modified actuating value to influence the at least one sequential chromatography in real-time either via directly influencing an actuator of the sequential chromatography or via influencing an actuator upstream of the sequential chromatography.

In one example the measuring point is a sampling outlet which can be connected to a Baychromat or other automatic sampling devices or robotic analytical at-line systems.

To a skilled person it is clear that the at least one measuring point can be at different locations within the system described above depending on the requirements of the chosen mathematical or modelling component. Moreover, more than one measuring point can be present, e.g. the system can comprise two or three or more measuring points.

For example the measuring point can be located before a unit operation - also termed upstream - and/or after a unit operation - also termed downstream - and/or before and/or after a residence time device and/or within a surge bag and/or a conditioning element and/or before and/or after the at least one sequential chromatography.

In one embodiment the unit operation is selected from the group consisting of ultrafiltration for concentration, diafiltration for buffer exchange, conditioning element for control of pH, conductivity, excipients, discharge module if material is predictively out of spec after seq. chromatography.

As used herein the term "mathematical or modelling component" refers to an algorithm altering the actuating value to arrive at the modified actuating value which in turn is used to influence the at least one actuator and hence the sequential chromatography in real-time. Examples of mathematical components are PID components and transfer functions, whereas an artificial neural network represents an example of a modelling component.

As used herein the term "unit operation" refers to a method step in a production process and/or to the device carrying out said method step in a production process.

Examples of unit operations in the purification of proteins are a chromatography, a filtration, a diafiltration etc..

As used herein the term "real-time" refers the fact that the at least one modified actuating value is calculated by the at least one modelling function before a given portion, i.e. the sampled portion, of the fluid stream arrives at the sequential chromatography thereby making it possible to influence the sequential chromatography.

To a skilled person it is clear that the time required by the fluid stream to flow from the at least one sampling point to the at least one sequential chromatography depends on several factors such as the flow rate, the dimensions of the residence time device or the surge bag and the characteristic of the at least one means. Moreover, it is clear that under normal operation conditions the flow rate of the fluid stream is not altered, instead the dimensions of the residence time device or the surge bag can be adapted - e.g. enlarged to prolong the time needed by a given sampled portion of the fluid stream to arrive at the sequential chromatography. However, the dimension of the residence time or the surge bag are restricted e.g. by product quality considerations

As used herein the term "actual process characteristic" refers to a specific value of a process characteristic of the fluid flow as it is actually present under the given circumstances Examples of actual process characteristic of the fluid flow that can be measured are conductivity, pH value, flow rate, process component feed concentrations, and/or temperature.

In contrast examples for the process features of the sequential chromatography that can be influenced by the system described herein are conductivity of feed and/or buffer streams, pH value of feed and/or buffer streams, flow rate of feed and/or buffer streams, feed concentrations, critical quality attributes feed and/or buffer streams, cutting criteria, buffer compositions, column volume, loading density feed and/or buffer streams and/or loading time feed and/or buffer streams.

As used herein the term "set value" is used interchangeably with the terms "set point value" and "target value" and refers to a specific value of a process characteristic of the fluid flow or a process features of the sequentially chromatography as it should be under the given circumstances and/or at a specific point in time.

As used herein the term "modified actuating value" also "termed manipulated value" refers to the value calculated by the mathematical or modelling component and is used to influence the at least one actuator.

As used herein the term "actuator" refers to a device that is capable of influencing the sequential chromatography via influencing the actual process characteristic and/or the process features of the sequentially chromatography and/or via adjusting the fluid flow.

Examples of actuators are a pump, a valve and/or a slave controller. A slave controller could be a PID controller for inline conditioning of a feed stream or chromatography buffer.

In an alternative preferred embodiment the empirical model corresponding to the transfer function comprised a complex data-driven algorithm, e.g. neural network. Such systems are trained to perform tasks by considering a training set of representative input-output data. For example the input refers to the actual process characteristics of the fluid stream entering the sequential chromatography, while the output is obtained by optimizing an available high-fidelity deterministic model of the sequential chromatography with the objective that the detected process characteristic of the product stream of the sequential chromatography is within a normal operation range.

Within the present application, controlling (in German "Regeln") refers to the measurement of the value which is to be influenced (control variable) and the continuous comparison of said value with the desired value (target value). Depending on the deviation between control variable and target value a controller calculates the value needed to minimize the deviation resulting in the control variable approaching the target value. Examples are thus a feedback or closed control loop.

In contrast regulating (Steuern) refers to setting a given process characteristic and/or process feature such as a pump rate to a specific value for a given period of time without external or process internal factors taking an influence on said specific value. An example is forward control.

In one embodiment of the system the modelling function is used to generate a process feeback signal. In other words the modelling function enables the use of a regulator ("Steuerer") as controller ("Regler") and which is thus termed "regulator used as controller".

In one example the modelling function is used as state estimator (in German "Zustandsschatzer") enabling the use of a regulator ("Steuerer") as controller ("Regler") and which is thus termed "regulator used as controller".

A feedback signal refers to part of an output signal which is routed back into the at least one process control system as input.

Thus the expression "predictive feedback signal based on at least one predicted process characteristic from at least one predictive model of the at least one sequential chromatography and/or at least one means" refers to a situation where at least one predictive model of the at least one sequential chromatography and/or at least one means is used to generate a predictive process feature and/or process characteristics.

The at least one process control system uses said predictive process feature and/or process characteristic instead of a measured actual feedback signal.

In contrast, the expression "feedback signal based on at least one detected process characteristic from a measurement point at the output of the sequential chromatography" refers to a situation where the feedback signal was not predicted by a modelling component but measured.

In one embodiment a feedback signal can be used to adapt the predictive model, e.g. to changing operating conditions for instance to arrive at different parameters for aging chromatography resins.

As used herein the term "fluid stream" or "fluid flow" refers to a flow of liquid and/or gas. In the sense of the current description is usually refers to the flow of liquid between the at least one sampling point and the at least one sequential chromatography. The fluid stream can comprise dissolved or partly dissolved species like a protein of interest or its precipitates, viral particles, salts, sugars and cell components and/ or salts, flocculations, precipitations and/or crystals.

As used herein the term "product stream" is used interchangeably with the terms "product flow" and "process stream" refers to a cell-free fluid from a heterogeneous cell culture fluid mixture that comprises a protein of interest. For sake of clarity the product stream is also a "fluid stream" or "fluid flow" in the sense of this description. Hence the input product stream enters a unit operation whereas the output product streams exits the unit operation.

### Figures:

The figures show representative examples.

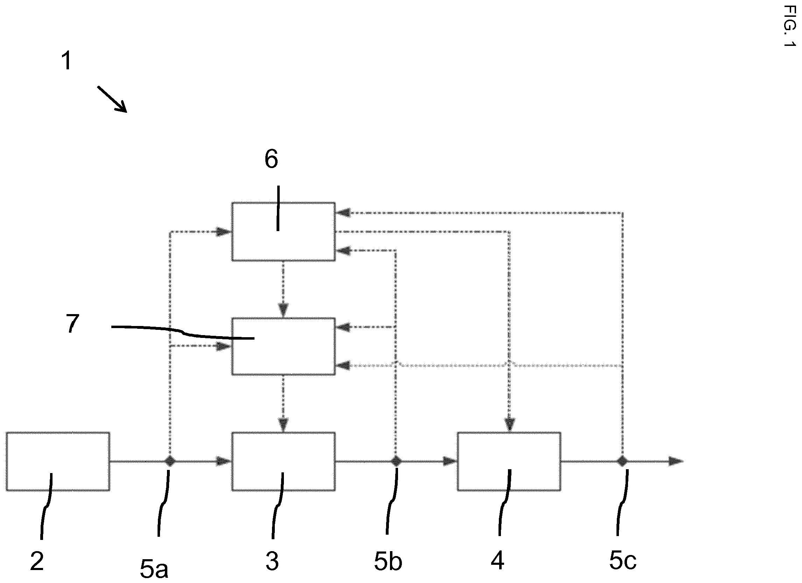

Fig. 1 depicts a schematic representation of a system as described herein. In this Example the system comprises a perfusion process (2), a unit operation (3), here a filtration and the sequential chromatography (4) is carried out using a BioSMB device and following the sequential chromatography the fluid stream is further processed as indicated by the arrow. Moreover, the at least process control system (1) comprising at least one mathematical or modelling component enabling influencing the at least one actuator in real-time comprises two mathematical or modelling components (6) and (7). In this example the at least one mathematical or modelling component (7) controls the filtration unit operation and the at least one mathematical or modelling component (6) controls or regulates the BioSMB depending on the configuration of the at least one process control system. In this example several possible measuring points (5a, 5b and 5c) are shown., i.e. a first possible measuring point (5a) is located between the perfusion process (2) and the unit operation (3). Alternatively or in addition a second measuring point (5b) can be located between the Unit Operation (3) and the sequential chromatography (4). Alternatively or in addition a third measuring point (5c) can be located downstream of the sequential Chromatography (4). At any of these measuring points (5a-5c), i.e. also at all measuring points or at one or two of these measuring points at least one process characteristic of the fluid stream is measured. The at least one detected process characteristic is transmitted in form of a signal, depicted by the dotted arrows depending on which measuring point is used, to the mathematical or modelling components (6) and/or (7) of at least one process control system, wherein based on the at least one process characteristic of the fluid stream the at least one mathematical or modelling component (6) and/or (7) calculates a modified actuating value which is used to influence the at least one sequential chromatography in real-time either via directly influencing an actuator of the sequential chromatography (not shown) or via influencing an actuator upstream of the sequential chromatography (not shown). In one example, the system comprises at least two measuring points one upstream of the at least one sequential chromatography (e.g. at 5a or 5b), where the process control system receives all available process characteristics and a second measurement point at the output of the sequenial chromatography.

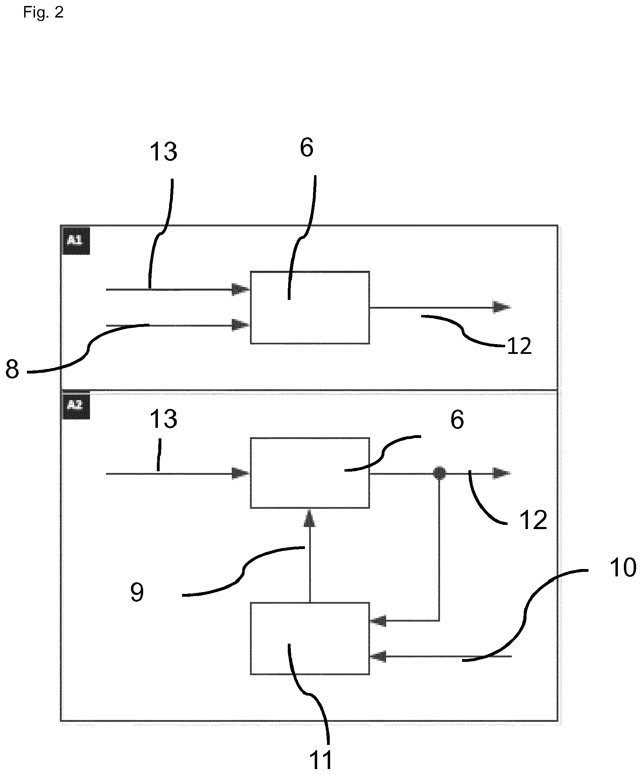

Fig. 2 schematically depicts two situations in which the system described herein comprises different modelling components
   In the situation A1 the process control system comprises at least one mathematical or modelling component (6) here a controller for control of the at least one sequential chromatography which comprises at least one PID component that receives at least one feedback signal based on at least one detected process characteristic (8) from at least one measurement point (5c) at the output of the sequential chromatography. Moreover, also the set point value (13) influences the modelling component (6) and the process control system outputs the modified actuating value (12).
   In the situation A2 the process control system comprises at least one mathematical or modelling component (6) here a regulator used as controller for control of the at least one sequential chromatography which comprises at least one PID component that receives at least one feedback signal based on at least one predicted process characteristic (9) from at least one predictive model (11) of the at least one sequential chromatography, wherein the predictive model of the at least one sequential chromatography receives at least one detected process characteristic (10) from the at least one measurement point (5a) or (5b) in Fig. (1). Moreover, also the set point value (13) influences the modelling component (6) and the process control system outputs the modified actuating value (12).

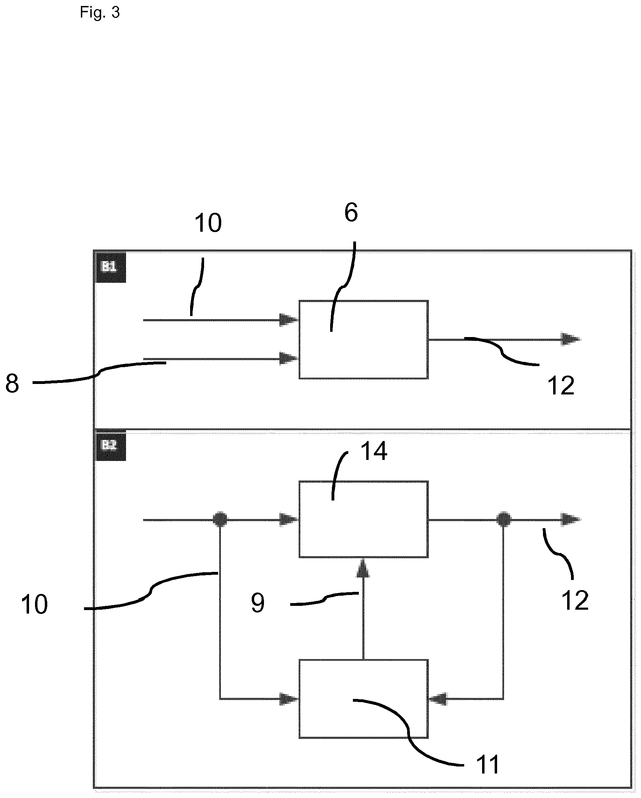

Fig. 3 schematically depicts two different control structures
   In the situation B1 the at least one process control system comprises at least one mathematical or modelling component here an optimizing controller, such as a non-linear model predictive controller for control of the at least one sequential chromatography (6) which receives at least one detected process characteristic (10) from the at least one measurement point (5a) or (5b) in Fig. (1) and at least one detected process characteristic (8) from a second measurement point at the output of the at least one sequential chromatography (5c in Fig. 1). The process control system outputs a modified actuating value (12).
   In the situation B2 the at least one process control system comprises at least one mathematical or modelling component here a regulator used as controller, here an optimizing regulator used as a non-linear model predictive controller, for control of the at least one sequential chromatography (14) which receives at least one feedback signal based on at least one predicted process characteristic (9) from at least one predictive model (11) of the at least one sequential chromatography, wherein the predictive model (11) of the at least one sequential chromatography receives at least one detected process characteristic (10) from the at least one measurement point (5a) or (5b) in Fig. (1) and at least one detected process characteristic (8) from a second measurement point at the output of the at least one sequential chromatography (5c in Fig. 1). The process control system outputs a modified actuating value (12).

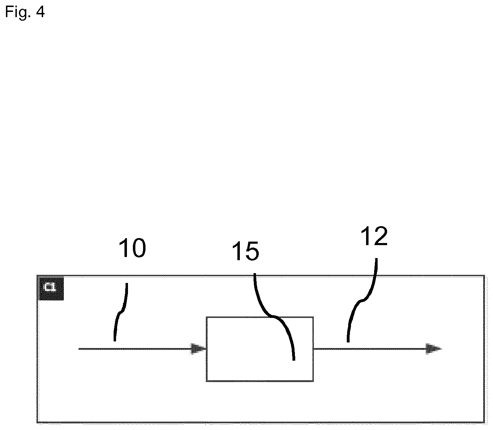

Fig. 4 schematically depicts a situation in which the at least one process control system comprises at least one mathematical or modelling component here a transfer function (15) wherein the at least one transfer function (15) receives at least one detected process characteristic (10) from at least one measurement point (5a) or (5b) in Fig. 1 and wherein the at least one transfer function calculates the modified actuating value (12) for manipulating the at least one sequential chromatography.

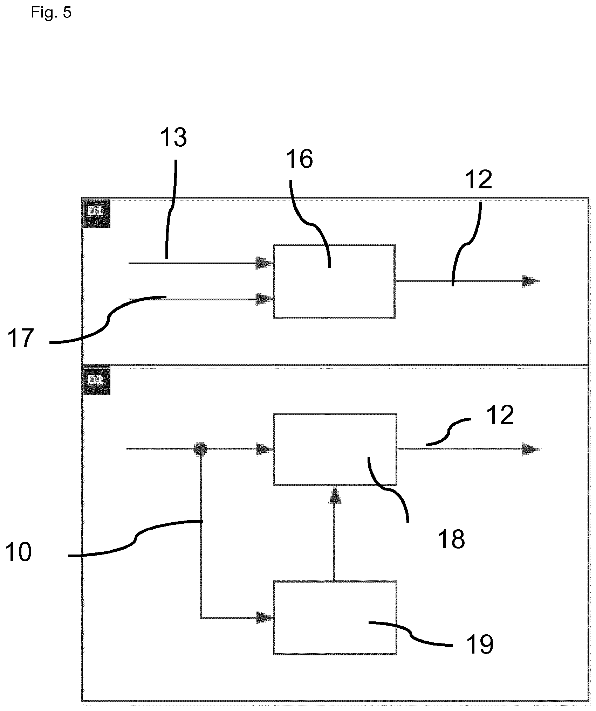

Fig. 5 schematically depicts two situations in which the at least one process control system comprises different control structures.

In the situation D1 the at least one process control system comprises at least one mathematical or modelling component here a controller for control of the at least one means (16) which comprises at least one PID component that receives at least one feedback signal based on at least one detected process characteristic (17) from a measurement point (5b in Fig.1) upstream of the at least one sequential chromatography and downstream of the at least one means. Moreover, also the set point value (13) influences the modelling component (6) and the process control system outputs the modified actuating value (12).

In the situation D2 the at least one process control system comprises at least one mathematical or modelling component here a regulator used as controller (18) for control of the at least one means which comprises at least one PID component that receives at least one feedback signal based on at least one predicted process characteristic from at least one predictive model (19) of the at least one means, wherein the predictive model of the at least one means receives at least one detected process characteristic (10) from the at least one measurement point (5a) or (5b) in Fig. 1. The process control system outputs the modified actuating value (12).

## Claims

1. System for influencing a sequential chromatography comprising at least
• a fluid stream
• at least one measurement point
• at least one actuator
• at least one sequential chromatography
• at least one process control system influencing the at least one actuator in real-time
wherein
∘ at the at least one measuring point at least one characteristic of the fluid stream corresponding to at least one actual process characteristic is measured, and
∘ wherein said at least one detected process characteristic is transmitted in form of a signal to the at least one process control system,
∘ wherein based on the at least one process characteristic of the fluid stream at least one mathematical or modelling component of the at least one process control system calculates a modified actuating value which is used to influence the at least one sequential chromatography in real-time either via directly influencing an actuator of the sequential chromatography or via influencing an actuator upstream of the sequential chromatography.

2. System according to claim 1 further comprising at least one unit operation.

3. System according to claims 1-2 wherein the at least one process control system further comprises a) at least one regulator, at least one regulator used as controller and/or at least one controller for control of at least one means, wherein the at least one regulator or controller for the at least one means comprises at least one PID component which receives at least one signal comprising the at least one detected process characteristic from the at least one measurement point OR wherein the at least one regulator used as controller for the at least one means comprises at least one PID component which receives at least one predictive feedback signal based on at least one predicted process characteristic from at least one predictive model of the at least one means
and/or
b) at least one regulator, at least one regulator used as controller and/or at least one controller for control of the at least one sequential chromatography, wherein the at least one controller or regulator used as controller for control of the at least one sequential chromatography comprises at least one PID component which receives at least one feedback signal based on at least one detected process characteristic from a measurement point at the output of the sequential chromatography OR wherein the regulator used as controller for control of the at least one sequential chromatography comprises at least one PID component which receives at least one predictive feedback signal based on at least one predicted process characteristic from at least one predictive model of the at least one sequential chromatography
and/or
c) at least one controller such as a non-linear model predictive controller of the at least one sequential chromatography wherein the controller for the sequential chromatography receives at least one signal comprising the at least one detected process characteristic from the at least one measurement point, which in this case is upstream of the at least one sequential chromatography, and wherein the controller for the sequential chromatography in addition receives at least one feedback signal based on at least one detected process characteristic from at least one second measurement point at the output of the sequential chromatography OR wherein the at least one controller of the at least one sequential chromatography receives at least one signal comprising the at least one detected process characteristic from the at least one measurement point, which in this case is upstream of the at least one sequential chromatography, and wherein the controller for the sequential chromatography in addition receives at least one feedback signal based on at least one predicted process characteristic from at least one predictive model of the at least one sequential chromatography
and/or
d) at least one transfer function comprising at least one empirical model which takes into account the at least one signal comprising the at least one detected process characteristic from the at least one measurement point
**characterized in that** each of the mathematical or modelling components described under a)-d) calculates a modified actuating value which is used to influence the at least one sequential chromatography in real-time via the at least one actuator.

4. System according to claim 3, wherein the predictive models of a)-d) comprise at least one deterministic or at least one empirical model of the at least one sequential chromatography.

5. System according to claim 3, wherein the at least one regulator, the at least one regulator used as controller or the at least one controller for the control of the at least one means is a regulator or controller for a unit operation.

6. System according to claims 1-5 further comprising at least one residence time device or at least one intermediate bag.

7. System according to claims 1-6 further comprising at least one conditioning element, which the product stream passes prior to entering the at least one sequential chromatography.

8. System according to claims 1-7 wherein the at least one measuring point is selected from group consisting of a detector or a system outlet such as a three way valve.

9. System according to claims 3-8, wherein a feedback signal is used to adapt the predictive model of the at least one means or the at least one sequential chromatography, for example to changing operating conditions.

10. Method for influencing a sequential chromatography comprising at least
• Measuring at least one characteristic of a fluid stream corresponding to at least one actual process characteristic at at least one measurement point,
• Transmitting said at least one detected process characteristic in form of a signal to at least one process control system
• Calculating at least one modified actuating value based on the at least one process characteristic of the fluid stream using at least one mathematical or modelling component of the at least one process control system
• Using the modified actuating value to influence the at least one sequential chromatography in real-time either via directly influencing an actuator of the sequential chromatography or via influencing an actuator upstream of the sequential chromatography.
